# EUROPEAN PATENT APPLICATION

(11) **EP 4 618 507 A1**
(43) Date of publication of application: **17.09.2025**
(21) Application number: 23888295.5
(22) Date of filing: 26.07.2023
(51) Int. Cl.: H04L 47/6295, G06F 13/28, H04L 47/628

(54) **COMMUNICATION DEVICE AND METHOD FOR RECEPTION DATA PROCESSING IN COMMUNICATION DEVICE**

(30) Priority: 07.11.2022 JP 2022177837
(71) Applicant: Hitachi, Ltd., Tokyo 100-8280 (JP)
(72) Inventor: TAKAHASHI, Shohei, Tokyo 100-8280 (JP); YAMADA, Hiromichi, Tokyo 100-8280 (JP); KIDO, Mitsuyasu, Tokyo 100-8280 (JP)
(74) Representative: Mewburn Ellis LLP
(86) International application number: PCT/JP2023/027362
(87) International publication number: WO 2024/100940

(57) **Abstract**

To shorten a time required for each CPU of a multi-core CPU to end access of reception data after receiving data. A communication device includes: a multi-core CPU implemented with a plurality of CPUs each configured to implement an application; a received frame processing unit configured to determine an Ethertype of reception data and allocate the reception data according to the Ethertype; and a plurality of receive FIFOs each configured to receive the reception data allocated by the received frame processing unit and store the reception data according to the Ethertype, in which each of the plurality of receive FIFOs is configured to transmit a reception interrupt signal to a corresponding CPU of the multi-core CPU when receiving the reception data, and the CPU that receives the reception interrupt signal is configured to acquire a data size of the reception data from the receive FIFO that transmits the reception interrupt signal and perform processing of reading the reception data based on the data size.

## Description

### Technical Field

The invention relates to a communication device and a reception data processing method in the communication device, and more particularly relates to a communication device including a multi-core CPU implemented with a plurality of CPUs each configured to implement an application, and a reception data processing method in the communication device.

### Background Art

There is a technique described in PTL 1 as a technique for improving processing performance in a communication device that processes reception data of a plurality of Ethertypes. PTL 1 discloses a technique of "a communication device including a data allocation unit that determines, based on a type of received data, a module allocation unit to be an allocation destination of the received data from a plurality of module allocation units that manage a plurality of modules, and allocates the received data to the determined module allocation unit."

### Citation List

### Patent Literature

PTL 1: JP2016-167673A

### Summary of Invention

### Technical Problem

The related art described in PTL 1 can satisfy conditions required by each of a plurality of network functions, but does not take into consideration a specific processing method for allocating data allocated by the data allocation unit to the plurality of modules. If each module cannot quickly access the received data allocated by the data allocation unit**,** a time required for the module to execute and end the processing after receiving the data cannot be shortened.

The invention has been made in view of such a situation, and an object of the invention is to provide a communication device capable of shortening a time required for each CPU of a multi-core CPU to end access of reception data after receiving data, and a reception data processing method in the communication device.

### Solution to Problem

In order to solve the above problems, a communication device according to the invention includes a multi-core CPU implemented with a plurality of CPUs each configured to implement an application; a received frame processing unit configured to determine an Ethertype of reception data and allocate the reception data according to the Ethertype; and a plurality of buffering memories each configured to receive the reception data allocated by the received frame processing unit and store the reception data according to the Ethertype, in which each of the plurality of buffering memories is configured to transmit a reception interrupt signal to a corresponding CPU among the plurality of CPUs when receiving the reception data allocated by the received frame processing unit, and the CPU that receives the reception interrupt signal is configured to acquire a data size of the reception data from the buffering memory that transmits the reception interrupt signal and perform processing of reading the reception data based on the data size.

In order to solve the above problems, a reception data processing method according to the invention includes performing, in a communication device including a multi-core CPU implemented with a plurality of CPUs each configured to implement an application, a processing step of determining an Ethertype of reception data and allocating the reception data according to the Ethertype; a storing step of storing the reception data allocated in the processing step in a plurality of buffering memories according to the Ethertype; and a read processing step of reading the reception data stored in the plurality of buffering memories, in which in the storing step, upon receiving the reception data allocated in the processing step, each of the plurality of buffering memories transmits a reception interrupt signal to a corresponding CPU among the plurality of CPUs, and in the read processing step, upon receiving the reception interrupt signal, the CPU acquires a data size of the reception data from the buffering memory that transmits the reception interrupt signal and performs processing of reading the reception data based on the data size.

### Advantageous Effects of Invention

According to the invention, it is possible to shorten a time required for each CPU of the multi-core CPU to end access of the reception data after receiving data.

Technical problems, configurations, and effects other than those described above will become apparent in the following description of embodiments.

### Brief Description of Drawings

[FIG. 1] FIG. 1 is a block diagram illustrating a hardware structure example of a communication device according to Embodiment 1 of the invention.
[FIG. 2] FIG. 2 is a flowchart illustrating an example of a processing procedure of a reception data processing method in the communication device according to Embodiment 1 of the invention.
[FIG. 3] FIG. 3 is a block diagram illustrating a hardware structure example of a communication device according to Embodiment 2 of the invention.
[FIG. 4] FIG. 4 is a flowchart illustrating an example of a processing procedure of a reception data processing method in the communication device according to Embodiment 2 of the invention.
[FIG. 5] FIG. 5 is a block diagram illustrating a hardware structure example of a communication device according to Embodiment 3 of the invention.
[FIG. 6] FIG. 6 is a flowchart illustrating an example of a processing procedure of a reception data processing method in the communication device according to Embodiment 3 of the invention.

### Description of Embodiments

Hereinafter, embodiments for carrying out the invention will be described with reference to the accompanying drawings. In the present specification and the drawings, constituent elements having substantially the same functions or configurations are denoted by the same reference numerals, and repeated description will be omitted.

### [Embodiment 1]

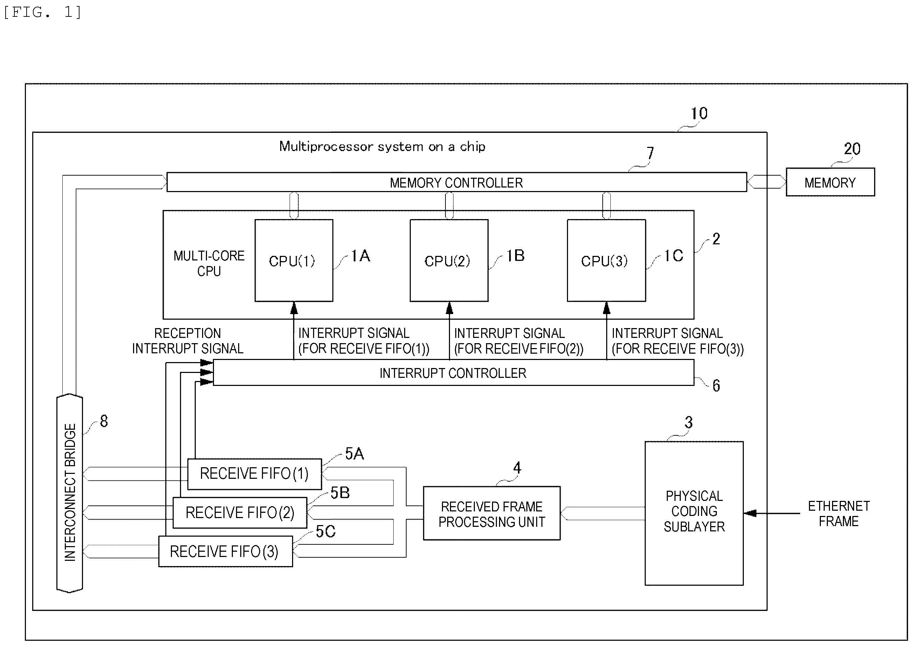

FIG. 1 is a block diagram illustrating a hardware structure example of a communication device according to Embodiment 1 of the invention.

As illustrated in FIG. 1, the communication device according to Embodiment 1 of the invention includes a multiprocessor system on a chip 10 and a memory 20. The multiprocessor system on a chip 10 includes a multi-core CPU 2 implemented with a plurality of CPUs each configured to implement an application, and in the present embodiment, the multi-core CPU 2 is implemented with three CPUs of a CPU(1) 1A, a CPU(2) 1B, and a CPU(3) 1C. The memory 20 is a memory for storing data to be processed by the CPU(1) 1A, the CPU(2) 1B, and the CPU(3) 1C of the multi-core CPU 2.

The multiprocessor system on a chip 10 includes, in addition to the multi-core CPU 2, a physical coding sublayer 3, a received frame processing unit 4, a plurality of receive FIFOs (in the present embodiment, three receive FIFOs of a receive FIFO(1) 5A, a receive FIFO(2) 5B, and a receive FIFO(3) 5C), an interrupt controller 6, a memory controller 7, and an interconnect bridge 8.

The receive FIFO(1) 5A, the receive FIFO(2) 5B, and the receive FIFO(3) 5C are first-in first-out (FIFO) memories. In the present specification, the "FIFO memory" will be simply referred to as "FIFO". The receive FIFO(1) 5A, the receive FIFO(2) 5B, and the receive FIFO(3) 5C are examples of the buffering memory in the claims. The buffering memory is a memory that can read and write data at high speed.

In the multiprocessor system on a chip 10 having the above configuration, the physical coding sublayer 3 decodes communication frames. The received frame processing unit 4 has a function of determining an Ethertype of reception data and allocating the reception data according to the Ethertype. The plurality of receive FIFOs of the receive FIFO(1) 5A, receive FIFO(2) 5B, and receive FIFO(3) 5C receive the reception data allocated according to the Ethertype by the received frame processing unit 4, and temporarily store the reception data according to the Ethertype.

The interrupt controller 6 allocates a plurality of interrupt causes to each CPU of the multi-core CPU 2, that is, the CPU(1) 1A, the CPU(2) 1B, and the CPU(3) 1C. That is, the interrupt controller 6 can allocate the plurality of interrupt causes to the CPU(1) 1A, the CPU(2) 1B, and the CPU(3) 1C of the multi-core CPU 2, based on reception interrupt signals, which will be described later, from the receive FIFO(1) 5A, the receive FIFO(2) 5B, and the receive FIFO(3) 5C.

The memory controller 7 is connected to the memory 20 and controls access to the memory by the CPU(1) 1A, the CPU(2) 1B, and the CPU(3) 1C of the multi-core CPU 2. That is, under the control of the memory controller 7, the CPU(1) 1A, the CPU(2) 1B, and the CPU(3) 1C that receive the reception interrupt signals from the interrupt controller 6 can perform processing of reading the reception data from the memory 20.

The interconnect bridge 8 connects the receive FIFO(1) 5A, the receive FIFO(2) 5B, and the receive FIFO(3) 5C to the memory controller 7, and transfers the reception data temporarily stored in the receive FIFO(1) 5A, the receive FIFO(2) 5B, and the receive FIFO(3) 5C to the memory controller 7. That is, by providing the interconnect bridge 8, the reception data temporarily stored in the receive FIFO(1) 5A, the receive FIFO(2) 5B, and the receive FIFO(3) 5C can be transferred to the memory controller 7.

The receive FIFO(1) 5A, the receive FIFO(2) 5B, and the receive FIFO(3) 5C have reception interrupt signals for each Ethertype for notifying that the reception data is stored, which are mapped to a memory space of the multi-core CPU 2. The receive FIFO(1) 5A, the receive FIFO(2) 5B, and the receive FIFO(3) 5C further have registers for holding the size of the temporarily stored reception data, which are mapped to the memory space of the multi-core CPU 2.

Upon receiving the reception interrupt signal from the interrupt controller 6, the CPU(1) 1A, the CPU(2) 1B, and the CPU(3) 1C read the data size of the reception data from the receive FIFO(1) 5A, the receive FIFO(2) 5B, and the receive FIFO(3) 5C via the interconnect bridge 8, and perform processing of reading the reception data based on the read data size. Here, the "processing of reading the reception data based on the data size" can be exemplified as an example of processing of reading only the reception data corresponding to the data size.

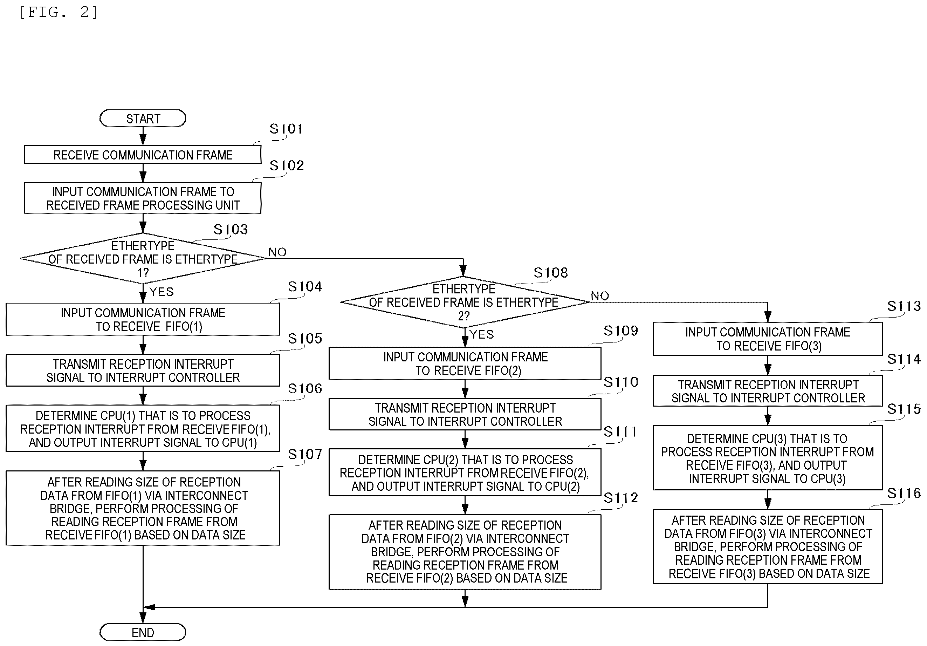

Next, a reception data processing method in the communication device according to Embodiment 1 having the above configuration will be described. FIG. 2 is a flowchart illustrating an example of a processing procedure of the reception data processing method in the communication device according to Embodiment 1.

First, upon receiving a communication frame (step S101), the physical coding sublayer 3 decodes the communication frame, and inputs the communication frame to the received frame processing unit 4 (step S102).

Next, the received frame processing unit 4 analyzes the Ethertype of the received communication frame, and determines whether the Ethertype matches a predetermined Ethertype 1 (step S103), and upon determining that the Ethertype of the received communication frame matches the Ethertype 1 (YES in S103), the received frame processing unit 4 inputs the communication frame of the Ethertype 1 to the receive FIFO(1) 5A (step S104).

Upon receiving the communication frame of the Ethertype 1 from the received frame processing unit 4, the receive FIFO(1) 5A transmits a reception interrupt signal to the interrupt controller 6 (step S105). Upon receiving the reception interrupt signal from the receive FIFO(1) 5A, the interrupt controller 6 determines a CPU of the multi-core CPU 2 (in the present embodiment, the CPU(1) 1A) that is to process the reception interrupt from the receive FIFO(1) 5A, and outputs an interrupt signal to the determined CPU (step S106).

In the processing of step S106, in the present embodiment, it is assumed that the CPU(1) 1A is to process the reception interrupt from receive FIFO(1) 5A. Here, an interrupt destination CPU can be set by the interrupt controller 6, and the number of interrupt destination CPUs is not limited to one, and two or more CPUs can also be set.

After reading the data size of reception data from the receive FIFO(1) 5A via the interconnect bridge 8, the CPU(1) 1A performs processing of reading the reception frame from the receive FIFO(1) 5A based on the data size (step S107), and then ends the series of processing for processing the reception data.

In the processing of step S103, upon determining that the Ethertype of the received communication frame does not match the Ethertype 1 (NO in S103), the received frame processing unit 4 analyzes the Ethertype of the received communication frame, and determines whether the Ethertype matches a predetermined Ethertype 2 (step S108). Upon determining that the Ethertype of the received communication frame matches the Ethertype 2 (YES in S108), the received frame processing unit 4 inputs the communication frame of the Ethertype 2 to the receive FIFO(2) 5B (step S109).

The receive FIFO(2) 5B, which receives the communication frame of the Ethertype 2 from the received frame processing unit 4, transmits a reception interrupt signal to the interrupt controller 6 (step S110). Upon receiving the reception interrupt signal from the receive FIFO(2) 5B, the interrupt controller 6 determines a CPU of the multi-core CPU 2 (in the present embodiment, the CPU(2) 1B) that is to process the reception interrupt from the receive FIFO(2) 5B, and outputs an interrupt signal to the determined CPU (step S111).

In the processing of step S111, in the present embodiment, it is assumed that the CPU(2) 1B is to process the reception interrupt from the receive FIFO(2) 5B. Here, the interrupt destination CPU can be set by the interrupt controller 6, and the number of interrupt destination CPUs is not limited to one, and two or more CPUs can also be set.

After reading the data size of reception data from the receive FIFO(2) 5B via the interconnect bridge 8, the CPU(2) 1B performs processing of reading the reception frame from the receive FIFO(2) 5B based on the data size (step S112), and then ends the series of processing for processing the reception data.

In the processing of step S108, upon determining that the Ethertype of the received communication frame does not match the Ethertype 2 (NO in S108), the received frame processing unit 4 inputs the communication frame of an Ethertype 3 to the receive FIFO(3) 5C (step S113).

The receive FIFO(3) 5C, which receives the communication frame of the Ethertype 3 from the received frame processing unit 4, transmits a reception interrupt signal to the interrupt controller 6 (step S114). Upon receiving the reception interrupt signal from the receive FIFO(3) 5C, the interrupt controller 6 determines a CPU of the multi-core CPU 2 (in the present embodiment, the CPU(3) 1C) that is to process the reception interrupt from the receive FIFO(3) 5C, and outputs an interrupt signal to the determined CPU (step S115).

In the processing of step S114, in the present embodiment, it is assumed that the CPU(3) 1C is to process the reception interrupt from the receive FIFO(3) 5C. Here, the interrupt destination CPU can be set by the interrupt controller 6, and the number of interrupt destination CPUs is not limited to one, and two or more CPUs can also be set.

After reading the size of reception data from the receive FIFO(3) 5C via the interconnect bridge 8, the CPU(3) 1C performs processing of reading the reception frame from the receive FIFO(3) 5C based on the data size (step S1116), and then ends the series of processing for processing the reception data.

As described above, in the communication device according to Embodiment 1 and the reception data processing method thereof, a plurality of buffering memories capable of reading and writing data at high speed are used as memories for storing reception data according to the Ethertype. Upon receiving the reception data, each of the plurality of buffering memories transmits the reception interrupt signal to a corresponding CPU of the plurality of CPUs, and the CPU that receives the reception interrupt signal acquires the data size of the reception data from the buffering memory and performs processing of reading the reception data based on the data size.

In this way, by determining the Ethertype of the reception data and allocating the reception data to the plurality of buffering memories capable of reading and writing data at high speed, and transferring the reception data from each buffering memory to each CPU of the multi-core CPU 2, it is possible to shorten a time required for each CPU of the multi-core CPU 2 to end access of the reception data after receiving the data. In particular, by using first-in first-out FIFO memories (the receive FIFO(1) 5A, the receive FIFO(2) 5B, and the receive FIFO(3) 5C) as the plurality of buffering memories, the effect of shortening the above time is significant.

### [Embodiment 2]

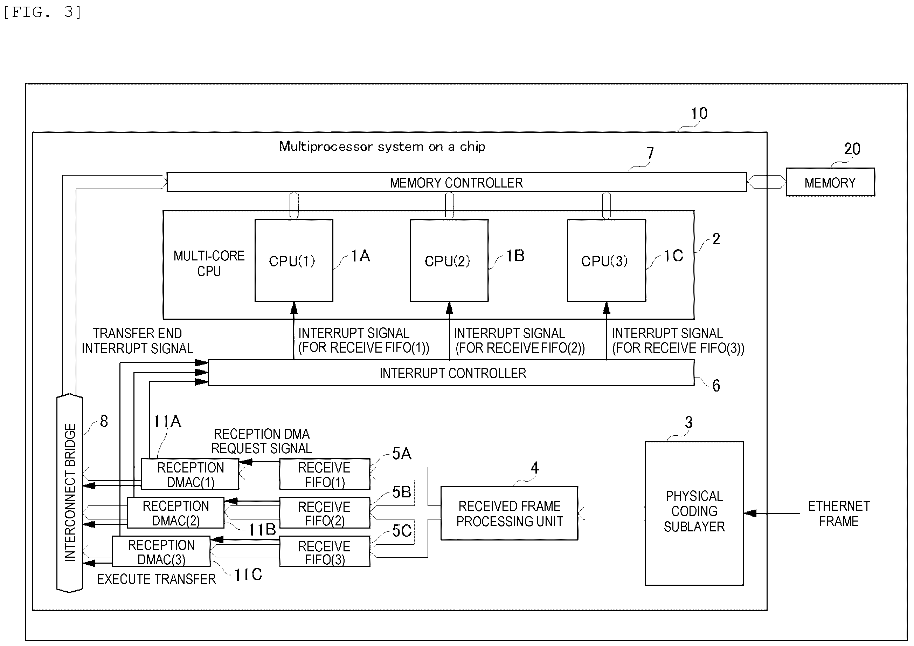

FIG. 3 is a block diagram illustrating a hardware configuration example of a communication device according to Embodiment 2 of the invention.

As illustrated in FIG. 3, the communication device according to Embodiment 2 of the invention includes the multiprocessor system on a chip 10 and the memory 20, similar to the communication device according to Embodiment 1. The multiprocessor system on a chip 10 includes the multi-core CPU 2 implemented with a plurality of CPUs each configured to implement an application, and in the present embodiment, the multi-core CPU 2 is implemented with three CPUs of the CPU(1) 1A, the CPU(2) 1B, and the CPU(3) 1C. The memory 20 is a memory for storing data to be processed by the CPU(1) 1A, the CPU(2) 1B, and the CPU(3) 1C of the multi-core CPU 2.

The multiprocessor system on a chip 10 includes, in addition to the multi-core CPU 2, the physical coding sublayer 3, the received frame processing unit 4, a plurality of receive FIFOs (in the present embodiment, three receive FIFOs of the receive FIFO(1) 5A, the receive FIFO(2) 5B, and the receive FIFO(3) 5C), the interrupt controller 6, the memory controller 7, and the interconnect bridge 8. The multiprocessor system on a chip 10 further includes a plurality of reception direct memory access controllers (DMACs) for different Ethertypes, and in the present embodiment, three reception DMACs of a reception DMAC(1) 11A, a reception DMAC(2) 11B, and a reception DMAC(3) 11C.

In the multiprocessor system on a chip 10 having the above configuration, functions of the physical coding sublayer 3, the received frame processing unit 4, the plurality of receive FIFOs of the receive FIFO(1) 5A, the receive FIFO(2) 5B, and the receive FIFO(3) 5C, the interrupt controller **6,** the memory controller 7, and the interconnect bridge 8 are basically the same as in the case of the communication device according to Embodiment 1.

The receive FIFO(1) 5A, the receive FIFO(2) 5B, and the receive FIFO(3) 5C each have a reception DMA request signal according to the Ethertype that notifies that reception data is stored, and if the reception data is stored, the reception DMA request signal is output to the reception DMAC(1) 11A, the reception DMAC(2) 11B, and the reception DMAC(3) 11C according to the Ethertype.

The reception DMAC(1) 11A, the reception DMAC(2) 11B, and the reception DMAC(3) 11C read the reception data from the receive FIFO(1) 5A, the receive FIFO(2) 5B, and the receive FIFO(3) 5C, and transfer the reception data to the memory 20 via the interconnect bridge 8. The reception DMAC(1) 11A, the reception DMAC(2) 11B, and the reception DMAC(3) 11C each have a transfer end interrupt signal that notifies the end of the transfer of reception data to the memory 20 when the transfer of the reception data to the memory 20 ends.

The reception DMAC(1) 11A, the reception DMAC(2) 11B, and the reception DMAC(3) 11C further include a register that is mapped to a memory space of the multi-core CPU 2 and holds the data size of the reception data transferred to the memory 20, and a register that sets a memory address for transferring the reception data stored in the receive FIFO(1) 5A, the receive FIFO(2) 5B, and the receive FIFO(3) 5C. Upon receiving a reception interrupt signal from the interrupt controller 6, the CPU(1) 1A, the CPU(2) 1B, and the CPU(3) 1C read the data size of the reception data from the reception DMAC(1) 11A, the reception DMAC(2) 11B, and the reception DMAC(3) 11C via the interconnect bridge 8, and then perform processing of reading the reception data from the memory 20 under the control of the memory controller 7.

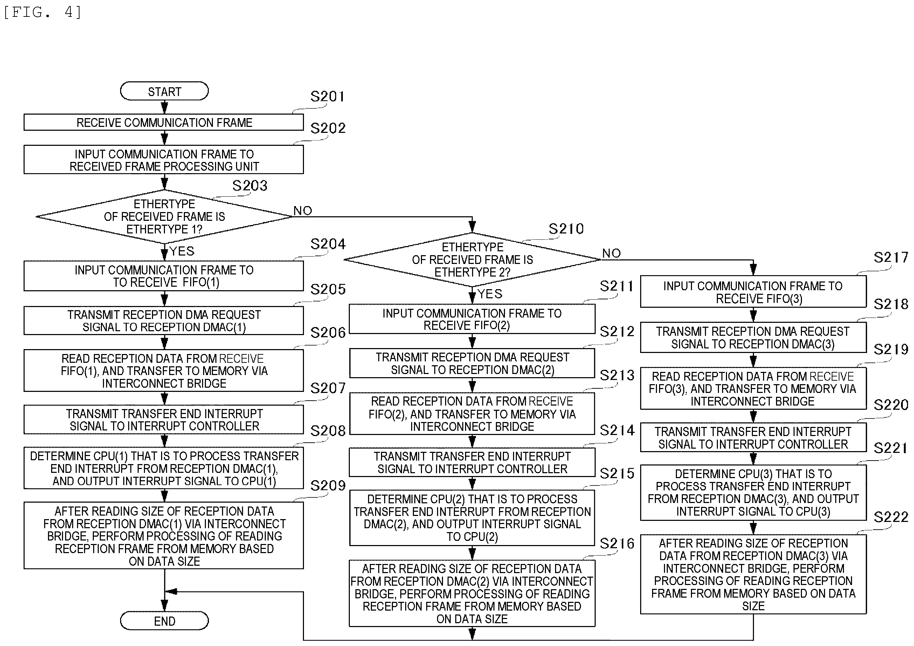

Next, a reception data processing method in the communication device according to Embodiment 2 having the above configuration will be described. FIG. 4 is a flowchart illustrating an example of a processing procedure of the reception data processing method in the communication device according to Embodiment 2.

First, upon receiving a communication frame (step S201), the physical coding sublayer 3 decodes the communication frame, and inputs the communication frame to the received frame processing unit 4 (step S202).

Next, the received frame processing unit 4 analyzes the Ethertype of the received communication frame, and determines whether the Ethertype matches the predetermined Ethertype 1 (step S203), and upon determining that the Ethertype of the received communication frame matches the Ethertype 1 (YES in S203), the received frame processing unit 4 inputs the communication frame of the Ethertype 1 to the receive FIFO(1) 5A (step S204).

Upon receiving the communication frame of the Ethertype 1 from the received frame processing unit **4,** the receive FIFO(1) 5A transmits a reception DMA request signal to the reception DMAC(1) 11A (step S205).

Upon receiving the reception DMA request signal, the reception DMAC(1) 11A reads the reception data from the receive FIFO(1) 5A, and transfers the reception data to the memory 20 via the interconnect bridge 8 (step S206).

When the data transfer to the memory 20 ends, the reception DMAC(1) 11A transmits a transfer end interrupt signal to the interrupt controller 6 (step S207). Upon receiving the transfer end interrupt signal, the interrupt controller 6 determines a CPU of the multi-core CPU 2 (in the present embodiment, the CPU(1) 1A) that is to process the transfer end interrupt from the reception DMAC(1) 11A, and outputs an interrupt signal to the determined CPU (step S208).

In the processing of step S208, in the present embodiment, it is assumed that the CPU(1) 1A is to process the reception interrupt from reception DMAC(1) 11A. Here, an interrupt destination CPU can be set by the interrupt controller 6, and the number of interrupt destination CPUs is not limited to one, and two or more CPUs can also be set.

After reading the data size of reception data from the reception DMAC(1) 11A via the interconnect bridge 8, the CPU(1) 1A performs processing of reading the reception frame from the memory 20 based on the data size (step S209), and then ends the series of processing for processing the reception data.

In the processing of step S203, upon determining that the Ethertype of the received communication frame does not match the Ethertype 1 (NO in S203), the received frame processing unit 4 analyzes the Ethertype of the received communication frame, and determines whether the Ethertype matches the predetermined Ethertype 2 (step S210). Upon determining that the Ethertype of the received communication frame matches the Ethertype 2 (YES in S210), the received frame processing unit 4 inputs the communication frame of the Ethertype 2 to the receive FIFO(2) 5B (step S211).

The receive FIFO(2) 5B, which receives the communication frame of the Ethertype 2 from the received frame processing unit 4, transmits a reception DMA request signal to the reception DMAC(2) 11B (step S212).

Upon receiving the reception DMA request signal, the reception DMAC(2) 11B reads the reception data from the receive FIFO(2) 5B, and transfers the reception data to the memory 20 via the interconnect bridge 8 (step S213).

When the data transfer to the memory 20 ends, the reception DMAC(2) 11B transmits a transfer end interrupt signal to the interrupt controller 6 (step S214). Upon receiving the transfer end interrupt signal, the interrupt controller 6 determines a CPU of the multi-core CPU 2 (in the present embodiment, the CPU(2) 1B) that is to process the transfer end interrupt from the reception DMAC(2) 11B, and outputs an interrupt signal to the determined CPU (step S215).

In the processing of step S215, in the present embodiment, it is assumed that the CPU(2) 1B is to process the reception interrupt from reception DMAC(2) 11B. Here, the interrupt destination CPU can be set by the interrupt controller 6, and the number of interrupt destination CPUs is not limited to one, and two or more CPUs can also be set.

After reading the data size of reception data from the reception DMAC(2) 11B via the interconnect bridge 8, the CPU(2) 1B performs processing of reading the reception frame from the memory 20 based on the data size (step S216), and then ends the series of processing for processing the reception data.

In the processing of step S210, upon determining that the Ethertype of the received communication frame does not match the Ethertype 2 (NO in S210), the received frame processing unit 4 inputs the communication frame of the Ethertype 3 to the receive FIFO(3) 5C (step S217).

The receive FIFO(3) 5C, which receives the communication frame of the Ethertype 3 from the received frame processing unit 4, transmits a reception DMA request signal to the reception DMAC(3) 11C (step S218).

Upon receiving the reception DMA request signal, the reception DMAC(3) 11C reads the reception data from the receive FIFO(3) 5C, and transfers the reception data to the memory 20 via the interconnect bridge 8 (step S219).

When the data transfer to the memory 20 ends, the reception DMAC(3) 11C transmits a transfer end interrupt signal to the interrupt controller 6 (step S220). Upon receiving the transfer end interrupt signal, the interrupt controller 6 determines a CPU of the multi-core CPU 2 (in the present embodiment, the CPU(3) 1C) that is to process the transfer end interrupt from the reception DMAC(3) 11C, and outputs an interrupt signal to the determined CPU (step S221).

In the processing of step S221, in the present embodiment, it is assumed that the CPU(3) 1C is to process the reception interrupt from the reception DMAC(3) 11C. Here, the interrupt destination CPU can be set by the interrupt controller 6, and the number of interrupt destination CPUs is not limited to one, and two or more CPUs can also be set.

After reading the data size of reception data from the reception DMAC(3) 11C via the interconnect bridge 8, the CPU(3) 1C performs processing of reading the reception frame from the memory 20 based on the data size (step S222), and then ends the series of processing for processing the reception data.

As described above, in the communication device according to Embodiment 2 and the reception data processing method thereof, as memories for storing the reception data according to the Ethertype, the plurality of receive FIFOs are used, and the plurality of reception DMACs are provided behind the plurality of receive FIFOs. Upon receiving the reception data, each of the plurality of receive FIFOs transmits the reception DMA request signal to a corresponding DMAC of the plurality of DMACs. Meanwhile, the DMAC that receives the reception DMA request signal reads the reception data from the receive FIFO that transmits the reception DMA request signal and transfers the reception data to the memory 20, and transmits a transfer end interrupt signal to a corresponding CPU among the plurality of CPUs when the transfer of the reception data ends.

In this way, by adopting a configuration in which the reception DMAC(1) 11A, the reception DMAC(2) 11B, and the reception DMAC(3) 11C including the register for setting the memory address for transferring the reception data are used, the reception DMAC(1) 11A, the reception DMAC(2) 11B, and the reception DMAC(3) 11C are responsible for reading data from the receive FIFO(1) 5A, the receive FIFO(2) 5B, and the receive FIFO(3) 5C. This eliminates the need for the multi-core CPU 2 to specify an address for reading the reception data, thereby reducing the burden on each CPU of the multi-core CPU 2, and further shortening a time required for each CPU of the multi-core CPU 2 to end access of the reception data after receiving the data.

### [Embodiment 3]

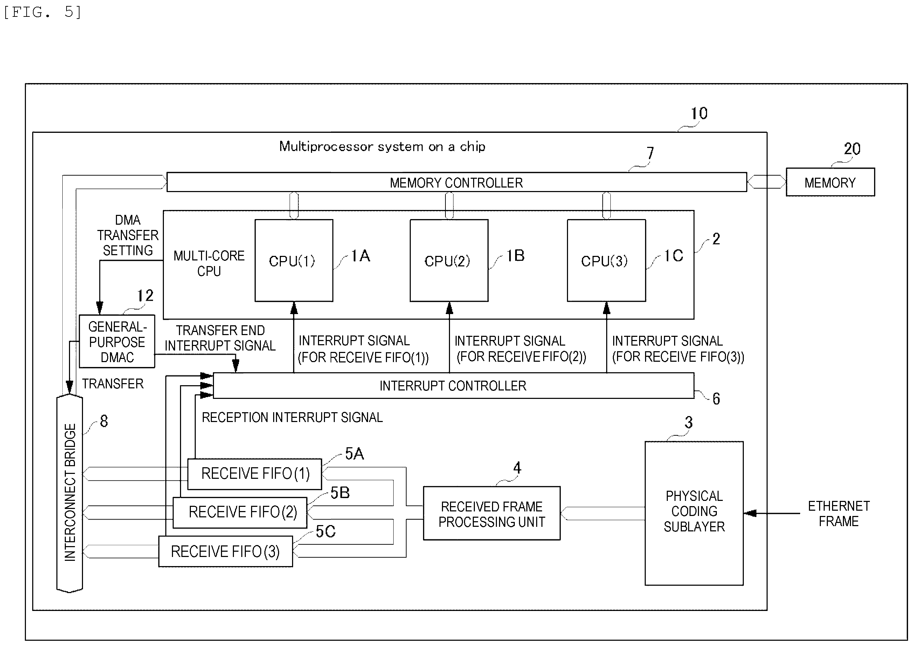

FIG. 5 is a block diagram illustrating a hardware configuration example of a communication device according to Embodiment 3 of the invention.

As illustrated in FIG. 5, the communication device according to Embodiment 3 of the invention includes the multiprocessor system on a chip 10 and the memory 20, similar to the communication device according to Embodiment 1. The multiprocessor system on a chip 10 includes the multi-core CPU 2 implemented with a plurality of CPUs each configured to implement an application, and in the present embodiment, the multi-core CPU 2 is implemented with three CPUs of the CPU(1) 1A, the CPU(2) 1B, and the CPU(3) 1C. The memory 20 is a memory for storing data to be processed by the CPU(1) 1A, the CPU(2) 1B, and the CPU(3) 1C of the multi-core CPU 2.

The multiprocessor system on a chip 10 includes, in addition to the multi-core CPU 2, the physical coding sublayer 3, the received frame processing unit 4, a plurality of receive FIFOs (in the present embodiment, three receive FIFOs of the receive FIFO(1) 5A, the receive FIFO(2) 5B, and the receive FIFO(3) 5C), the interrupt controller 6, the memory controller 7, and the interconnect bridge 8. The multiprocessor system on a chip 10 further includes a general-purpose DMAC 12 that reads reception data from the plurality of receive FIFOs of the receive FIFO(1) 5A, the receive FIFO(2) 5B, and the receive FIFO(3) 5C and transfers the reception data to the memory 20 via the interconnect bridge 8.

In the multiprocessor system on a chip 10 having the above configuration, functions of the physical coding sublayer 3, the received frame processing unit 4, the plurality of receive FIFOs of the receive FIFO(1) 5A, the receive FIFO(2) 5B, and the receive FIFO(3) 5C, the interrupt controller 6, the memory controller 7, and the interconnect bridge 8 are basically the same as in the case of the communication device according to Embodiment 1.

The receive FIFO(1) 5A, the receive FIFO(2) 5B, and the receive FIFO(3) 5C have reception interrupt signals for each Ethertype for notifying that the reception data is stored, which are mapped to a memory space of the multi-core CPU 2. The receive FIFO(1) 5A, the receive FIFO(2) 5B, and the receive FIFO(3) 5C further have registers for holding the size of the stored reception data, which are mapped to the memory space of the multi-core CPU 2.

Upon receiving the reception interrupt signal, the CPU(1) 1A, the CPU(2) 1B, and the CPU(3) 1C read the data size of the reception data from the receive FIFO(1) 5A, the receive FIFO(2) 5B, and the receive FIFO(3) 5C via the interconnect bridge 8. Thereafter, the CPU(1) 1A, the CPU(2) 1B, and the CPU(3) 1C set DMA transfer from the receive FIFO(1) 5A, the receive FIFO(2) 5B, and the receive FIFO(3) 5C to the memory 20 with respect to the general-purpose DMAC 12.

The general-purpose DMAC 12 receives the setting of DMA transfer from the CPU(1) 1A, the CPU(2) 1B, and the CPU (3) 1C, and executes the DMA transfer from the receive FIFO(1) 5A, the receive FIFO(2) 5B, and the receive FIFO(3) 5C to the memory 20. When the DMA transfer ends, the general-purpose DMAC 12 transmits a transfer end interrupt signal that notifies the end of the transfer to the interrupt controller 6. The CPU(1) 1A, the CPU(2) 1B, and the CPU(3) 1C that receive the transfer end interrupt signal from the interrupt controller 6 perform processing of reading the reception data from the memory 20.

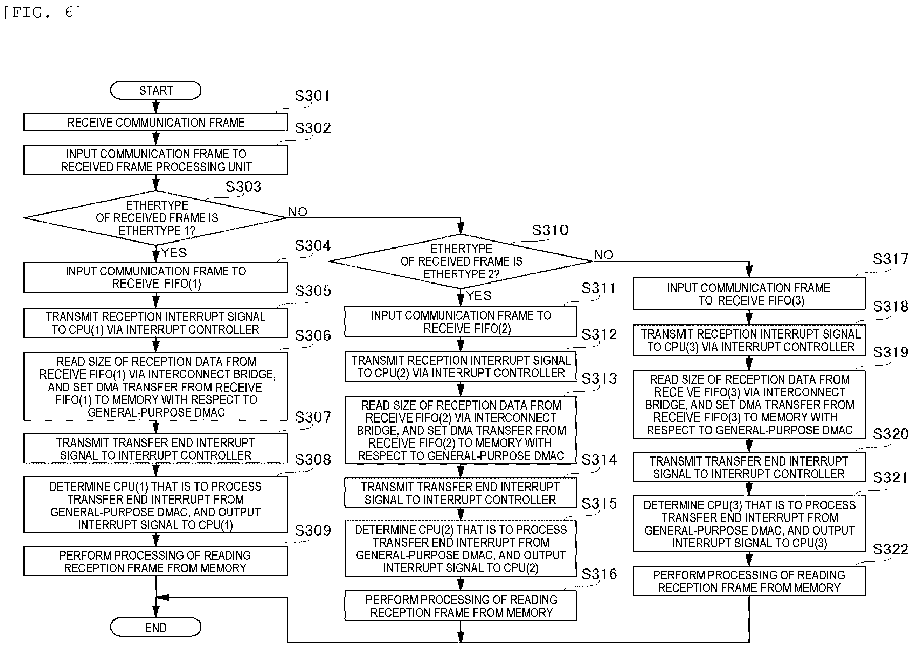

Next, a reception data processing method in the communication device according to Embodiment 3 having the above configuration will be described. FIG. 6 is a flowchart illustrating an example of a processing procedure of the reception data processing method in the communication device according to Embodiment 3.

First, upon receiving a communication frame (step S301), the physical coding sublayer 3 decodes the communication frame, and inputs the communication frame to the received frame processing unit 4 (step S302).

Next, the received frame processing unit 4 analyzes the Ethertype of the received communication frame, and determines whether the Ethertype matches the predetermined Ethertype 1 (step S303), and upon determining that the Ethertype of the received communication frame matches the Ethertype 1 (YES in S303), the received frame processing unit 4 inputs the communication frame of the Ethertype 1 to the receive FIFO(1) 5A (step S304).

Upon receiving the communication frame of the Ethertype 1 from the received frame processing unit **4,** the receive FIFO(1) 5A transmits a reception interrupt signal to the CPU(1) 1A via the interrupt controller 6 (step S305). Upon receiving the reception interrupt signal, the CPU(1) 1A reads the size of the reception data from the receive FIFO(1) 5A via the interconnect bridge 8, and sets DMA transfer from the receive FIFO(1) 5A to the memory 20 with respect to the general-purpose DMAC 12 (step S306).

When the DMA transfer ends, the general-purpose DMAC 12 transmits a transfer end interrupt signal that notifies the end of the transfer to the interrupt controller 6 (step S307). The interrupt controller 6 determines a CPU (in the present embodiment, the CPU(1) 1A) that is to process the transfer end interrupt from the general-purpose DMAC 12, and outputs an interrupt signal to the determined CPU (step S308).

In the present embodiment, it is assumed that the CPU(1) 1A is to process the transfer end interrupt from the general-purpose DMAC 12, but an interrupt destination CPU can be set by the interrupt controller **6,** the number of interrupt destination CPUs is not limited to one, and two or more CPUs can also be set.

The CPU(1) 1A performs processing of reading the reception frame from the memory 20 (step S309), and then ends the series of processing for processing the reception data.

In the processing of step S303, upon determining that the Ethertype of the received communication frame does not match the Ethertype 1 (NO in S303), the received frame processing unit 4 analyzes the Ethertype of the received communication frame, and determines whether the Ethertype matches the predetermined Ethertype 2 (step S310). Upon determining that the Ethertype of the received communication frame matches the Ethertype 2 (YES in S310), the received frame processing unit 4 inputs the communication frame of the Ethertype 2 to the receive FIFO(2) 5B (step S311).

Upon receiving the communication frame of the Ethertype 2 from the received frame processing unit 4, the receive FIFO(2) 5B transmits a reception interrupt signal to the CPU(2) 1B via the interrupt controller 6 (step S312). Upon receiving the reception interrupt signal, the CPU(2) 1B reads the size of the reception data from the receive FIFO(2) 5B via the interconnect bridge 8, and sets DMA transfer from the receive FIFO(2) 5B to the memory 20 with respect to the general-purpose DMAC 12 (step S313).

When the DMA transfer ends, the general-purpose DMAC 12 transmits a transfer end interrupt signal that notifies the end of the transfer to the interrupt controller 6 (step S314). The interrupt controller 6 determines a CPU (in the present embodiment, the CPU(2) 1B) that is to process the transfer end interrupt from the general-purpose DMAC 12, and outputs an interrupt signal to the determined CPU (step S315).

In the present embodiment, it is assumed that the CPU(2) 1B is to process the transfer end interrupt from the general-purpose DMAC 12, but the interrupt destination CPU can be set by the interrupt controller **6,** the number of interrupt destination CPUs is not limited to one, and two or more CPUs can also be set.

The CPU(2) 1B performs processing of reading the reception frame from the memory 20 (step S316), and then ends the series of processing for processing the reception data.

In the processing of step S310, upon determining that the Ethertype of the received communication frame does not match the Ethertype 2 (NO in S310), the received frame processing unit 4 inputs the communication frame of the Ethertype 3 to the receive FIFO(3) 5C (step S317).

Upon receiving the communication frame of the Ethertype 3 from the received frame processing unit **4,** the receive FIFO(3) 5C transmits a reception interrupt signal to the CPU(3) 1C via the interrupt controller 6 (step S318). Upon receiving the reception interrupt signal, the CPU(3) 1C reads the size of the reception data from the receive FIFO(3) 5C via the interconnect bridge 8, and sets DMA transfer from the receive FIFO(3) 5C to the memory 20 with respect to the general-purpose DMAC 12 (step S319).

When the DMA transfer ends, the general-purpose DMAC 12 transmits a transfer end interrupt signal that notifies the end of the transfer to the interrupt controller 6 (step S320). The interrupt controller 6 determines a CPU (in the present embodiment, the CPU(3) 1C) that is to process the transfer end interrupt from the general-purpose DMAC 12, and outputs an interrupt signal to the determined CPU (step S321).

In the present embodiment, it is assumed that the CPU(3) 1C is to process the transfer end interrupt from the general-purpose DMAC 12, but the interrupt destination CPU can be set by the interrupt controller **6,** the number of interrupt destination CPUs is not limited to one, and two or more CPUs can also be set.

The CPU(3) 1C performs processing of reading the reception frame from the memory 20 (step S322), and then ends the series of processing for processing the reception data.

As described above, in the communication device according to Embodiment 3 and the reception data processing method thereof, the general-purpose DMAC 12 is used in place of the plurality of reception DMACs of the reception DMAC(1) 11A, the reception DMAC(2) 11B, and the reception DMAC(3) 11C in Embodiment 2, and thus the configuration of the multiprocessor system on a chip 10 can be simplified as compared with Embodiment **2.**

It is to be understood that the invention is not limited to the embodiments described above, and various other applications and modifications may be made without departing from the scope of the invention described in the claims. For example, in each of the embodiments described above, the configuration of the device is described in detail and specifically in order to describe the invention in an easy-to-understand manner, and the device is not necessarily limited to including all the configurations described. A part of a configuration in the embodiment described here can be replaced with a configuration in another embodiment, and a configuration in another embodiment can be added to a configuration in a certain embodiment. A part of a configuration in each embodiment may also be added to, deleted from, or replaced with another configuration.

### Reference Signs List

- 1A:: CPU (1)
- 1B:: CPU(2)
- 1C:: CPU(3)
- 2:: multi-core CPU
- 3:: physical coding sublayer
- 4:: received frame processing unit
- 5A:: receive FIFO(1)
- 5B:: receive FIFO(2)
- 5C:: receive FIFO(3)
- 6:: interrupt controller
- 7:: memory controller
- 8:: interconnect bridge
- 10:: multiprocessor system on a chip
- 11A:: reception DMAC(1)
- 11B:: reception DMAC(2)
- 11C:: reception DMAC(3)
- 12:: general-purpose DMAC
- 20:: memory

## Claims

1. A communication device comprising:
a multi-core CPU implemented with a plurality of CPUs each configured to implement an application;
a received frame processing unit configured to determine an Ethertype of reception data and allocate the reception data according to the Ethertype; and
a plurality of buffering memories each configured to receive the reception data allocated by the received frame processing unit and store the reception data according to the Ethertype, wherein
each of the plurality of buffering memories is configured to transmit a reception interrupt signal to a corresponding CPU among the plurality of CPUs when receiving the reception data allocated by the received frame processing unit, and
the CPU that receives the reception interrupt signal is configured to acquire a data size of the reception data from the buffering memory that transmits the reception interrupt signal and perform processing of reading the reception data based on the data size.

2. The communication device according to claim 1, wherein the plurality of buffering memories are FIFO memories.

3. The communication device according to claim 1, further comprising:
an interrupt controller configured to allocate a plurality of interrupt causes to each CPU of the multi-core CPU.

4. The communication device according to claim 3, further comprising:
a memory configured to store data to be processed by each CPU of the multi-core CPU; and
a memory controller connected to the memory and configured to control access to the memory by each CPU of the multi-core CPU.

5. The communication device according to claim **4,** further comprising:
an interconnect bridge configured to transfer data from the plurality of buffering memories to the memory.

6. The communication device according to claim 1, further comprising:
a plurality of reception DMACs; and
a memory configured to store data to be processed by each CPU of the multi-core CPU, wherein
each of the plurality of buffering memories is configured to transmit a reception DMA request signal to a corresponding reception DMAC among the plurality of reception DMACs when receiving the reception data allocated by the received frame processing unit,
the reception DMAC that receives the reception DMA request signal is configured to read the reception data from the buffering memory that transmits the reception DMA request signal and transfer the reception data to the memory, and transmit, when the transfer of the reception data ends, a transfer end interrupt signal notifying the end of the transfer of the reception data to the memory to a corresponding CPU among the plurality of CPUs, and
the CPU that receives the transfer end interrupt signal is configured to acquire the data size of the reception data from the DMAC that transmits the reception DMA request signal and perform processing of reading the reception data based on the data size.

7. The communication device according to claim 1, further comprising:
a memory configured to store data to be processed by each CPU of the multi-core CPU; and
a general-purpose DMAC configured to read the reception data from the plurality of buffering memories and transfer the reception data to the memory, wherein
each of the plurality of buffering memories is configured to transmit the reception interrupt signal to a corresponding CPU among the plurality of CPUs when receiving the reception data allocated by the received frame processing unit,
the CPU that receives the reception interrupt signal is configured to acquire the data size of the reception data from the buffering memory that transmits the reception interrupt signal and perform DMA transfer setting and transfer permission with respect to the general-purpose DMAC,
the general-purpose DMAC that receives the DMA transfer setting and transfer permission is configured to execute DMA transfer from the plurality of buffering memories to the memory, and then transmit a transfer end interrupt signal to a corresponding CPU among the plurality of CPUs, and
the CPU that receives the transfer end interrupt signal is configured to perform processing of reading the reception data from the memory.

8. A reception data processing method in a communication device, the communication device including a multi-core CPU implemented with a plurality of CPUs each configured to implement an application, the method comprising:
a processing step of determining an Ethertype of reception data and allocating the reception data according to the Ethertype;
a storing step of storing the reception data allocated in the processing step in a plurality of buffering memories according to the Ethertype; and
a read processing step of reading the reception data stored in the plurality of buffering memories, wherein
in the storing step, upon receiving the reception data allocated in the processing step, each of the plurality of buffering memories transmits a reception interrupt signal to a corresponding CPU among the plurality of CPUs, and
in the read processing step, upon receiving the reception interrupt signal, the CPU acquires a data size of the reception data from the buffering memory that transmits the reception interrupt signal and performs processing of reading the reception data based on the data size.
